# EUROPÄISCHE PATENTSCHRIFT

(11) **EP 1 989 074 B1**
(45) Veröffentlichungstag und Bekanntmachung des Hinweises auf die Patenterteilung: **23.06.2010**
(21) Anmeldenummer: 07721896.4
(22) Anmeldetag: 05.02.2007
(51) Int. Cl.: B60J 7/12

(54) **FALTVERDECK FÜR EIN KRAFTFAHRZEUG**
FOLDING CANOPY FOR A MOTOR VEHICLE
CAPOTE DÉPLIANTE POUR UN VÉHICULE AUTOMOBILE

(30) Priorität: 28.02.2006 DE 102006009264
(43) Veröffentlichungstag der Anmeldung: 12.11.2008
(73) Patentinhaber: Webasto AG, 82131 Stockdorf (DE)
(72) Erfinder: BIECKER, Peter, 82041 Oberhaching (DE); DIETL, Rudolf, 81247 München (DE)
(86) Internationale Anmeldenummer: PCT/DE2007/000227
(87) Internationale Veröffentlichungsnummer: WO 2007/098729

(56) Entgegenhaltungen:
- DE-A1- 10 051 436
- DE-A1- 10 065 324
- DE-B3-102005 041 541

## Beschreibung

Die vorliegende Erfindung betrifft ein Faltverdeck für ein Kraftfahrzeug, mit einem einen Hauptlenker und eine Hauptsäule aufweisenden Verdeckgestänge, wobei der Hauptlenker und die Hauptsäule über jeweils einen ersten Gelenkpunkt an einem karosseriefesten Hauptlager des Fahrzeugs gelagert sind und über jeweils einen zweiten Gelenkpunkt mittels eines Verbindungselements gelenkig miteinander verbunden sind, und einem Dichtungsträger der beweglich mit der Hauptsäule verbunden ist. Die Erfindung betrifft weiterhin ein Kraftfahrzeug mit einem Faltverdeck.

Eine wichtige Aufgabe bei der Konstruktion von Faltverdecken besteht in der Platz sparenden Unterbringung des abgelegten Verdecks. Insbesondere ist man bestrebt, die an dem Verdeckgestänge angebrachten Dichtungsträger beim Ablegen des Verdecks in eine Platz sparende Position zu verschwenken. Die vorliegende Erfindung befasst sich diesbezüglich mit der an der C-Säule des Faltverdecks angeordneten Dichtung, die im geschlossenen Zustand des Verdecks eine abdichtende Funktion zur hinteren Seitenscheibe des Fahrzeugs zur Verfügung stellt.

In der DE 100 51 436 A1 wird bereits eine nützliche Möglichkeit zur Platz sparenden Unterbringung der hinteren Dichtung beschrieben. Dabei ist der Dichtungsträger gelenkig mit der Hauptsäule verbunden, und er wird ferner über eine gelenkig am karosseriefesten Hauptlager befestigten Koppelstange angelenkt. Dies hat zur Folge, dass beim Verschwenken der Hauptsäule nach hinten über die Koppelstange eine Kraft auf den Dichtungsträger ausgeübt wird, die diesen im abgelegten Zustand des Verdecks in eine Platz sparende Position bringt. Aufgrund der Hebelverhältnisse bei diesem System treten hohe Kräfte auf, die letztlich zu starken Materialbeanspruchungen führen können. Da weiterhin die Hauptsäule aufgrund der Koppelstange eine definierte Position zur Karosserie einnimmt, müssen zusätzliche Maßnahmen ergriffen werden, um die Hauptsäule und insbesondere die Dichtung bei der Montage des Verdecks optimal zu positionieren.

Der Erfindung liegt die Aufgabe zugrunde, die geschilderten Systeme des Standes der Technik zu verbessern, insbesondere im Hinblick auf die beim Ablegen des Verdecks auftretenden Kräfte sowie die Variabilität der Verdeckmontage.

Diese Aufgabe wird mit den Merkmalen des unabhängigen Anspruches gelöst.

Vorteilhafte Ausführungsformen der Erfindung sind in den abhängigen Ansprüchen angegeben.

Die Erfindung baut auf dem gattungsgemäßen Faltverdeck dadurch auf, dass der Hauptlenker und der Dichtungsträger über einen Querlenker gelenkig miteinander verbunden sind. Hierdurch wird der die Verschwenkung des Dichtungsträgers herbeiführende Hub mittels des Querlenkers aus der Relativbewegung von Hauptlenker und Hauptsäule bezogen. Der Winkel, mit dem der Querlenker am Dichtungsträger angreift ist stumpfer als bei den Systemen des Standes der Technik, so dass im Hinblick auf die wirkenden Kräfte ein verbesserter Wirkungsgrad für die Schwenkbewegung des Dichtungsträgers zur Verfügung gestellt wird. Der Querlenker liegt vollständig innerhalb des Bauraums für das Verdeckgestänge, so dass insbesondere im Hinblick auf die Verschwenkung des Dichtungsträgers keinerlei Vorkehrungen am Rohbau des Fahrzeugs getroffen werden müssen.

Gemäß einer bevorzugten Ausführungsform ist vorgesehen, dass der Dichtungsträger um eine Drehachse schwenkbar mit der Hauptsäule verbunden ist. Dabei handelt es sich um eine besonders einfache Kopplung von Dichtungsträger und Hauptsäule.

Bei besonderen Anforderungen an die Relativbewegung von Dichtungsträger und Hauptsäule kann aber auch vorgesehen sein, dass der Dichtungsträger mittels einer Gelenkmechanik gelenkig mit der Hauptsäule verbunden ist.

Die Erfindung ist besonders in dem Zusammenhang nützlich, dass die Hauptsäule in Fahrtrichtung vor dem Hauptlenker angeordnet ist. In diesem Fall lassen sich besonders vorteilhafte Hebelverhältnisse realisieren.

Es kann aber auch vorgesehen sein, dass die Hauptsäule in Fahrtrichtung hinter dem Hauptlenker angeordnet ist.

Die Erfindung ist auch in dem Zusammenhang von Vorteil, dass über die Anordnung des Querlenkers die Position des Dichtungsträgers einstellbar ist. Neben seiner Kraftübertragungsfunktion kann über den Querlenker also zusätzlich die Position des Dichtungsträgers eingestellt werden, was die Montage des Verdeckes vereinfacht.

In diesem Zusammenhang ist es nützlich, dass die Anordnung des Querlenkers mittels Lageveränderung des Gelenkpunktes, über den der Querlenker mit dem Hauptlenker verbunden ist, einstellbar ist.

Die Erfindung ist in vorteilhafterweise dadurch weitergebildet, dass der Dichtungsträger im geöffneten Zustand des Faltdaches zumindest teilweise auf der dem abgelegten Faltverdeck abgewandten Seite der Hauptsäule liegt. In vertikaler Richtung wird somit Bauraum eingespart, in dem auf der Außenseite der Hauptsäule zur Verfügung stehender Stauraum verwendet wird.

Die Erfindung betrifft weiterhin ein Kraftfahrzeug mit einem erfindungsgemäßen Faltverdeck.

Die Erfindung wird nun mit Bezug auf die begleitenden Zeichnungen anhand besonders bevorzugter Ausführungsformen beispielhaft erläutert.

Es zeigen:
- Figur 1: eine perspektivische Darstellung eines erfin- dungsgemäßen Faltverdecks im geschlossenen Zu- stand;
- Figur 2: eine perspektivische Darstellung eines Abschnit- tes eines erfindungsgemäßen Faltverdecks im Be- reich der C-Säule im geschlossen Zustand des Faltverdecks aus seitlicher Perspektive;
- Figur 3: den Abschnitt gemäß Figur 2 von hinten in Fahrtrichtung betrachtet;
- Figur 4: den Abschnitt gemäß Figur 2 aus im Vergleich zu Figur 3 leicht erhöhter Perspektive;
- Figur 5: eine perspektivische Darstellung des Faltverdecks gemäß Figur 1 in einer Zwischenstellung zwischen geschlossenem und abgelegtem Zustand;
- Figur 6: eine perspektivische Darstellung des Faltverdecks gemäß Figur 1 in abgelegtem Zustand; und
- Figur 7: den Abschnitt gemäß Figur 2 in abgelegtem Zustand des Faltverdecks von unten betrachtet.

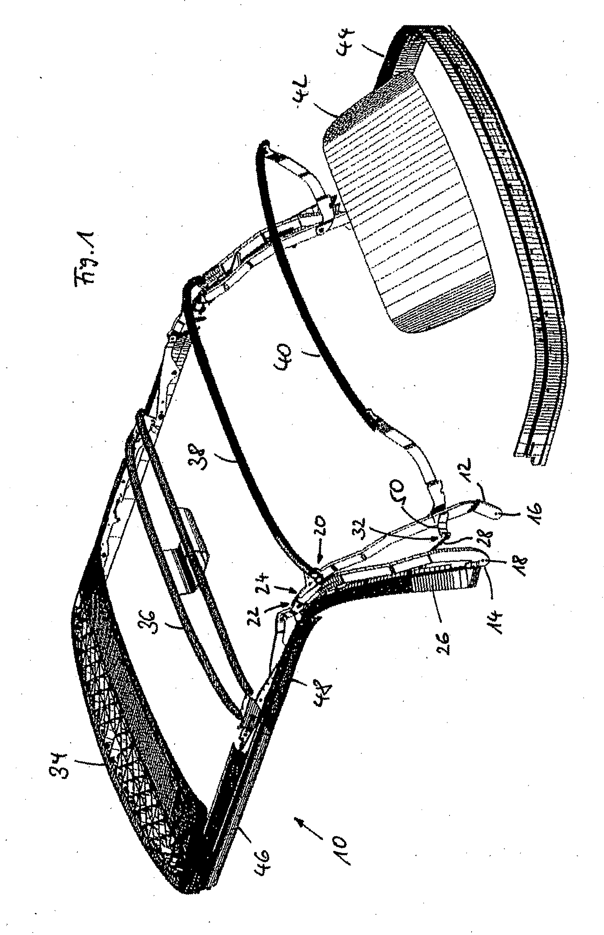

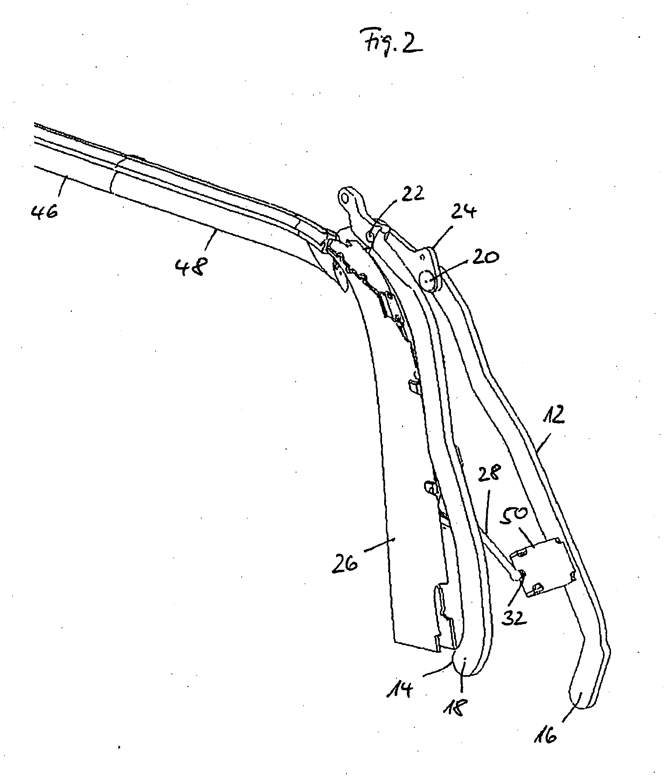

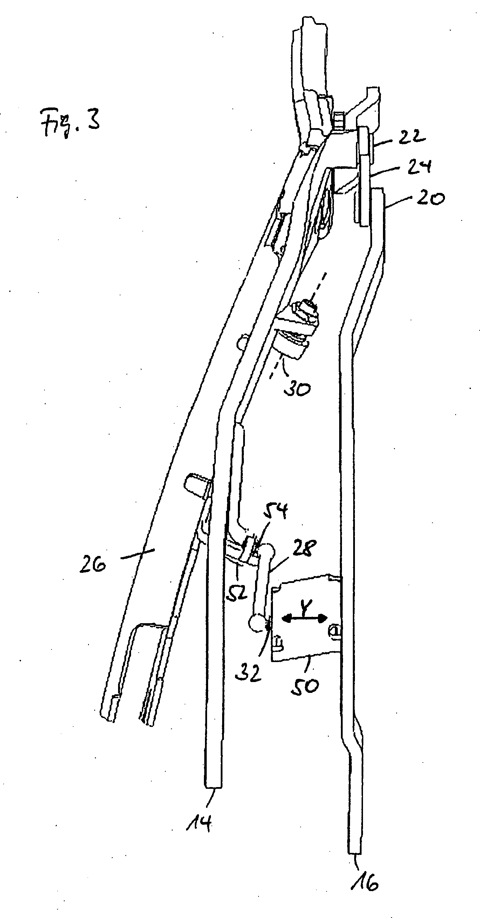

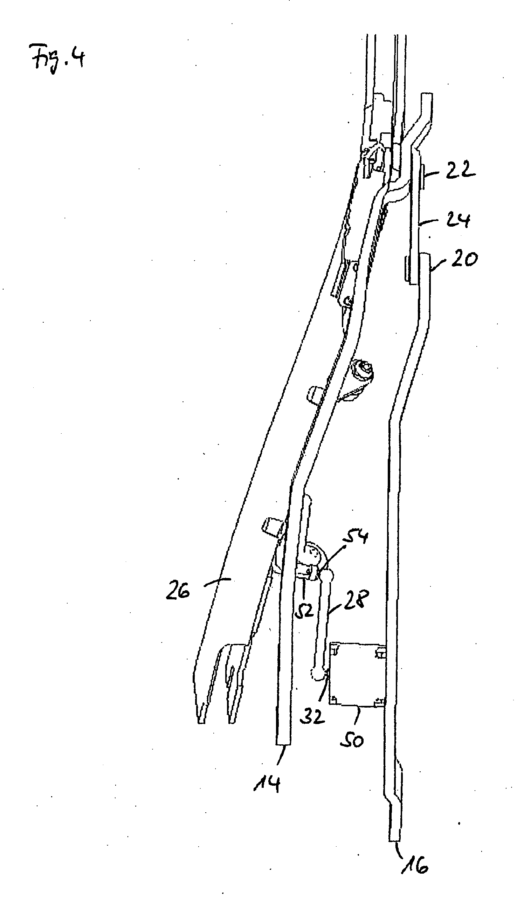

Die Figuren 1 bis 4 zeigen ein Faltverdeck 10 beziehungsweise einen Abschnitt eines Faltverdecks 10 im Bereich der C-Säule. Dabei zeigt Figur 2 einen Abschnitt aus seitlicher Blickrichtung, Figur 3 zeigt den Abschnitt von hinten betrachtet und Figur 4 zeigt den Abschnitt aus gegenüber Figur 3 leicht erhöhter Betrachtungsposition. Das Faltverdeck 10 umfasst, in Fahrtrichtung von vorne nach hinten, einen Frontspriegel 34, eine Dachkassette 36, einen Hauptspriegel 38 sowie einen Eckspriegel 40. Im hinteren Bereich des Faltverdecks sind weiterhin eine Heckscheibe 42 und ein Spannbügel 44 angeordnet. Die Spriegel 34, 38, 40 und die Dachkassette 36 bilden quer zur Fahrtrichtung verlaufende Elemente des Verdeckgestänges, die seitlich mit Seitenteilen des Verdeckgestänges verbunden sind. Im Zusammenhang mit der vorliegenden Erfindung interessieren besonders die hinteren seitlichen Elemente des Verdeckgestänges. Dies sind insbesondere ein Hauptlenker 12 und eine Hauptsäule 14, die über Gelenkpunkte 16, 18 mit einem karosseriefesten Hauptlager (nicht dargestellt) gelenkig verbunden sind. An ihren anderen Endbereichen sind der Hauptlenker 12 und die Hauptsäule 14 über Gelenkpunkte 20, 22 mittels eines Zwischenelementes 24 gelenkig miteinander verbunden, so dass insgesamt ein Viergelenk ausgebildet wird. An die Hauptsäule 18 schließen sich die weiteren mittleren und vorderen seitlichen Elemente des Verdeckgestänges an. An diesen vorderen und mittleren seitlichen Elementen des Verdeckgestänges sind ein vorderer Dichtungsträger 46 und ein mittlerer Dichtungsträger 48 befestigt. An der Hauptsäule 14 ist ein hinterer Dichtungsträger 26 gelenkig über eine Achse 30 angeordnet. Zwischen dem hinteren Dichtungsträger 26 und dem Hauptlenker 16 ist ein Querlenker 28 vorgesehen, der sowohl mit dem Dichtungsträger 26 als auch mit dem Hauptlenker 12 gelenkig verbunden ist. Zwischen dem Hauptlenker 12 und dem Querlenker 28 ist ein Zwischenstück 50 angeordnet, das einerseits mit dem Hauptlenker 12 fest verbunden ist, während es für die Verbindung mit dem Querlenker 28 einen Gelenkpunkt 32 zur Verfügung stellt. Das Zwischenstück 50 kann in unterschiedlicher Weise realisiert sein, wie auch an den unterschiedlichen Ausführungen in den Figuren 1 beziehungsweise 2 bis 4 erkennbar ist. Beispielsweise kann es sich um ein laschenartiges Metallstück oder auch um ein kastenförmiges Zwischenelement handeln. Nützlicherweise ist das Zwischenstück 50 und/oder die Anordnung des Gelenkpunktes 32 am Zwischenstück 50 in Y-Richtung, das heißt horizontal quer zur Fahrtrichtung, variabel, so dass auf diese Weise die Position des Dichtungsträgers 26 in Y-Richtung eingestellt werden kann. Am Dichtungsträger 26 ist ebenfalls ein Zwischenstück 52 vorgesehen, dass den zweiten Gelenkpunkt 54 für den Querlenker zur Verfügung stellt. Es ist auch denkbar, dass im Bereich dieses Zwischenstücks eine Einstellbarkeit der Anordnung in Y-Richtung zur Verfügung gestellt wird.

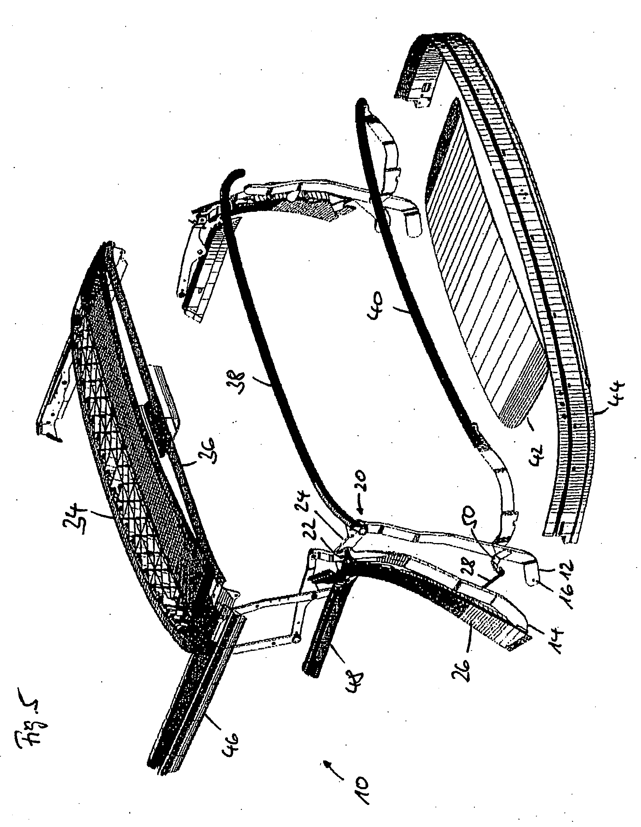

Figur 5 zeigt eine perspektivische Darstellung des Faltverdecks gemäß Figur 5 in einer Zwischenstellung zwischen geschlossenem und abgelegtem Zustand. Zum ablegen des Faltverdecks werden über einen (nicht dargestellten) Antrieb der Hauptlenker 12 und die Hauptsäule 14 nach hinten verschwenkt, wobei aufgrund der viergelenkartigen Anordnung verschiedene parallelogrammartige Zwischenzustände nacheinander eingenommen werden.

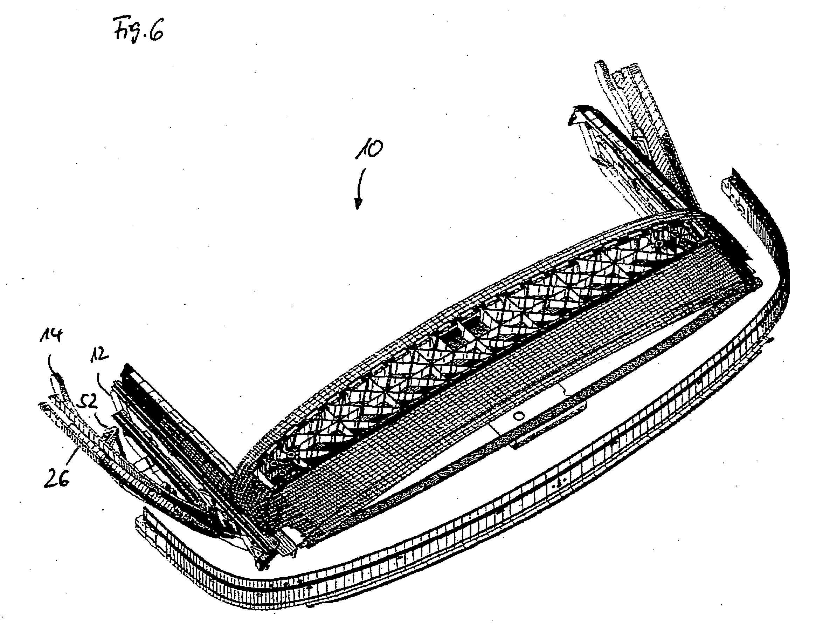

Figur 6 zeigt eine perspektivische Darstellung des Faltverdecks gemäß Figur 1 in abgelegtem Zustand

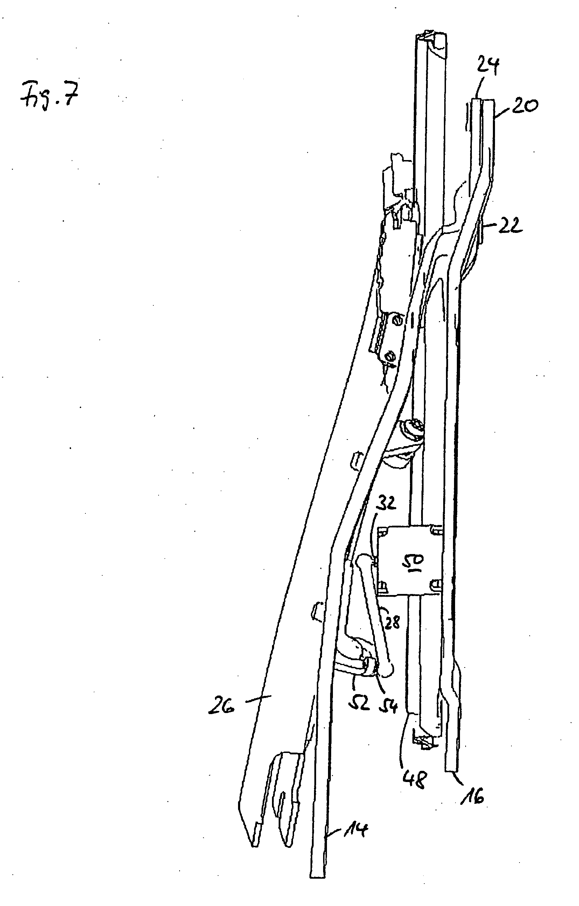

Figur 7 zeigt den Abschnitt gemäß Figur 2 in abgelegtem Zustand des Faltverdecks von unten betrachtet. Im abgelegten Zustand des Faltverdecks 10 liegen der Dichtungsträger 26 und damit in der Praxis auch die von diesem getragene Dichtung zumindest teilweise außerhalb der Hauptsäule 14 und insbesondere nicht vollständig über der Hauptsäule 14. Auf diese Weise bleibt die Bauhöhe des abgelegten Faltverdecks 10 gering. Den Hub, der den Dichtungsträger 26 in seine Ablegeposition bringt, wird aus der Relativbewegung zwischen Hauptlenker 16 und Hauptsäule 18 bezogen, wobei aufgrund der günstigen Kraftübertragungswinkel vergleichsweise geringe Kräfte ausreichen, um die vorteilhafte Ablageposition des Dichtungsträgers 26 herbeizuführen.

Die in der vorstehenden Beschreibung, in den Zeichnungen sowie in den Ansprüchen offenbarten Merkmale der Erfindung können sowohl einzeln als auch in beliebiger Kombination für die Verwirklichung der Erfindung wesentlich sein.

### Bezugszeichenliste

- 10: Faltverdeck
- 12: Hauptlenker
- 14: Hauptsäule
- 16: Gelenkpunkt
- 18: Gelenkpunkt
- 20: Gelenkpunkt
- 22: Gelenkpunkt
- 24: Verbindungselement
- 26: Dichtungsträger
- 28: Querlenker
- 30: Drehachse
- 32: Gelenkpunkt
- 34: Frontspriegel
- 36: Dachkassette
- 38: Hauptspriegel
- 40: Eckspriegel
- 42: Heckscheibe
- 44: Spannbügel
- 46: vorderer Dichtungsträger
- 48: mittlerer Dichtungsträger
- 50: Zwischenstück
- 52: Zwischenstück
- 54: Gelenkpunkt

## Patentansprüche

1. Faltverdeck für ein Kraftfahrzeug, mit
- einem einen Hauptlenker (12) und eine Hauptsäule (14) aufweisenden Verdeckgestänge, wobei der Hauptlenker und die Hauptsäule über jeweils einen ersten Gelenkpunkt (16, 18) an einem karosseriefesten Hauptlager des Fahrzeugs gelagert sind und über jeweils einen zweiten Gelenkpunkt (20, 22) mittels eines Verbindungselements (24) gelenkig miteinander verbunden sind, und
- einem Dichtungsträger (26), der beweglich mit der Hauptsäule verbunden ist,
**dadurch gekennzeichnet, dass** der Hauptlenker (12) und der Dichtungsträger (26) über einen Querlenker (28) gelenkig miteinander verbunden sind.

2. Faltverdeck nach Anspruch 1, **dadurch gekennzeichnet, dass** der Dichtungsträger (26) um eine Drehachse (30) schwenkbar mit der Hauptsäule (14) verbunden ist.

3. Faltverdeck nach Anspruch 1, **dadurch gekennzeichnet, dass** der Dichtungsträger mittels einer Gelenkmechanik gelenkig mit der Hauptsäule verbunden ist.

4. Faltverdeck nach einem der vorhergehenden Ansprüche, **dadurch gekennzeichnet, dass** die Hauptsäule (14) in Fahrtrichtung vor dem Hauptlenker (12) angeordnet ist.

5. Faltverdeck nach einem der Ansprüche 1 bis 3, **dadurch gekennzeichnet, dass** die Hauptsäule in Fahrtrichtung hinter dem Hauptlenker angeordnet ist.

6. Faltverdeck nach einem der vorhergehenden Ansprüche, **dadurch gekennzeichnet, dass** über die Anordnung des Querlenkers (28) die Position des Dichtungsträgers (26) einstellbar ist.

7. Faltverdeck nach Anspruch 6, **dadurch gekennzeichnet, dass** die Anordnung des Querlenkers (28) mittels Lageveränderung des Gelenkpunktes (32), über den der Querlenker mit dem Hauptlenker (12) verbunden ist, einstellbar ist.

8. Faltverdeck nach einem der vorhergehenden Ansprüche, **dadurch gekennzeichnet, dass** der Dichtungsträger (26) im geöffneten Zustand des Faltdaches zumindest teilweise auf der dem abgelegten Faltverdeck (10) abgewandten Seite der Hauptsäule (14) liegt.

9. Kraftfahrzeug mit einem Faltverdeck (10) nach einem der vorhergehenden Ansprüche.

## Claims

1. Folding canopy for a motor vehicle, with
- a canopy linkage which has a main link (12) and a main pillar (14), wherein the main link and the main pillar are mounted via a respective first hinge point (16, 18) on a body-mounted main bearing of the vehicle, and are connected to each other in an articulated manner via a respective second hinge point (20, 22) by means of a connecting element (24), and
- a seal carrier (26) which is connected movably to the main pillar,
**characterized in that** the main link (12) and the seal carrier (26) are connected to each other in an articulated manner via a transverse link (28).

2. Folding canopy according to Claim 1, **characterized in that** the seal carrier (26) is connected to the main pillar (14) in a manner such that it can pivot about an axis of rotation (30).

3. Folding canopy according to Claim 1, **characterized in that** the seal carrier is connected to the main pillar in an articulated manner by means of a hinge mechanism.

4. Folding canopy according to one of the preceding claims, **characterized in that** the main pillar (14) is arranged in front of the main link (12) in the direction of travel.

5. Folding canopy according to one of Claims 1 to 3, **characterized in that** the main pillar is arranged behind the main link in the direction of travel.

6. Folding canopy according to one of the preceding claims, **characterized in that** the position of the seal carrier (26) can be adjusted via the arrangement of the transverse link (28).

7. Folding canopy according to Claim 6, **characterized in that** the arrangement of the transverse link (28) can be adjusted by means of changing the position of the hinge point (32) via which the transverse link is connected to the main link (12).

8. Folding canopy according to one of the preceding claims, **characterized in that**, in the open state of the folding roof, the seal carrier (26) lies at least partially on that side of the main pillar (14) which faces away from the put-away folding canopy (10).

9. Motor vehicle with a folding canopy (10) according to one of the preceding claims.

## Revendications

1. Capote dépliante pour un véhicule automobile, avec :
une tringlerie de capote comportant un bras de liaison principal (12) et un montant principal (14), le bras oscillant principal et le montant principal étant disposés, via respectivement un premier point articulé (16, 18), sur un palier principal du véhicule, fixe par rapport à la carrosserie, et reliés entre eux de façon articulée via respectivement un deuxième point articulé (20, 22), à l'aide d'un élément de liaison (24) ; et
un support d'étanchéité (26) relié de façon mobile au montant principal ;
**caractérisée en ce que** le bras oscillant principal (12) et le support d'étanchéité (26) sont reliés entre eux de façon articulée via un bras oscillant transversal (28).

2. Capote dépliante selon la revendication 1, **caractérisée en ce que** le support d'étanchéité (26) est relié au montant principal (14) de façon à pivoter autour d'un axe de rotation (30).

3. Capote dépliante selon la revendication 1, **caractérisée en ce que** le support d'étanchéité est relié de façon articulée au montant principal à l'aide d'un mécanisme articulé.

4. Capote dépliante selon l'une quelconque des revendications précédentes, **caractérisée en ce que** le montant principal (14) est disposé avant le bras oscillant principal (12) dans la direction de conduite.

5. Capote dépliante selon l'une quelconque des revendications 1 à 3, **caractérisée en ce que** le montant principal est disposé derrière le bras oscillant principal dans la direction de conduite.

6. Capote dépliante selon l'une quelconque des revendications précédentes, **caractérisée en ce que** la position du support d'étanchéité (26) peut être réglée via l'agencement du bras oscillant transversal (28).

7. Capote dépliante selon la revendication 6, **caractérisée en ce que** l'agencement du bras oscillant transversal (28) peut être réglé à l'aide du changement de position du point articulé (32) via lequel le bras oscillant transversal est relié au bras oscillant principal (12).

8. Capote dépliante selon l'une quelconque des revendications précédentes, **caractérisée en ce que** le support d'étanchéité (26) repose à l'état ouvert de la capote pliante au moins en partie sur le côté du montant principal (14) opposé à la capote dépliante (10) rangée.

9. Véhicule automobile avec une capote dépliante (10) selon l'une quelconque des revendications précédentes.
